# EUROPÄISCHE PATENTSCHRIFT

(11) **EP 2 928 710 B1**
(45) Veröffentlichungstag und Bekanntmachung des Hinweises auf die Patenterteilung: **08.08.2018**
(21) Anmeldenummer: 13786499.7
(22) Anmeldetag: 07.11.2013
(51) Int. Cl.: B60H 1/00, F25B 30/02

(54) **VERFAHREN ZUM BETREIBEN EINES KÄLTEMITTELKREISLAUFS ALS WÄRMEPUMPE**
METHOD FOR OPERATING A REFRIGERANT CIRCUIT AS A HEAT PUMP
PROCÉDÉ SERVANT À FAIRE FONCTIONNER UN CIRCUIT DE FLUIDE DE REFROIDISSEMENT COMME UNE POMPE À CHALEUR

(30) Priorität: 10.12.2012 DE 102012222594
(43) Veröffentlichungstag der Anmeldung: 14.10.2015
(73) Patentinhaber: Bayerische Motoren Werke Aktiengesellschaft, 80809 München (DE)
(72) Erfinder: HERBOLZHEIMER, Robert, 82194 Groebenzell (DE); SATZGER, Peter, 86899 Landsberg am Lech (DE); HORN, Oliver, 81475 Muenchen (DE); KNOTT, Martin, 85221 Dachau (DE); MORGENSTERN, Stefan, 81825 München (DE); SCHEDEL, Felix, 82131 Gauting (DE)
(86) Internationale Anmeldenummer: PCT/EP2013/073201
(87) Internationale Veröffentlichungsnummer: WO 2014/090484

(56) Entgegenhaltungen:
- FR-A1- 2 969 042
- JP-A- H10 297 270
- JP-A- 2004 182 204

## Beschreibung

Die vorliegende Erfindung betrifft ein Verfahren zum Betreiben eines Kältemittelkreislaufs als Wärmepumpe gemäß dem Oberbegriff des Patentanspruches 1 sowie einen als Wärmepumpe betreibbaren Kältemittelkreislauf gemäß dem Oberbegriff des Patentanspruches 17.

Ein Verfahren gemäß dem Oberbegriff des Patentanspruches 1 ist aus der JP H 10297270 A bekannt. Zum technischen Hintergrund der Erfindung zählen die FR 2 969 042 A1 sowie die JP 2004 182204 A.

Bei Elektro- und Hybrid-Fahrzeugen werden zunehmend als Wärmepumpe betreibbare Kältemittelkreisläufe zur Temperierung des Fahrgastraumes und/oder einzelner Fahrzeugkomponenten in Betracht gezogen. Bei niedrigen Außentemperaturen (z.B. bei Temperaturen unter 0°C) erbringen Wärmepumpenkreisläufe mit den bei bisherigen Klimaanlagen üblichen Komponentengrößen, d.h. den üblichen Verdampfer- bzw. Kondensatorgrößen, nur eine vergleichsweise geringe Heizleistung, die unter dem Bedarf heutiger Fahrzeuge liegt. Bislang bekannte Wärmepumpenkonzepte für Fahrzeuge weisen daher in der Regel zusätzliche elektrische Heizeinrichtungen auf, die bei niedrigen Außentemperaturen eine elektrische "Zuheizung" ermöglichen.

Aufgabe der Erfindung ist es, ein Verfahren zum Betreiben eines Kältemittelkreislaufs anzugeben, das auch bei niedrigen Außentemperaturen eine hinreichend hohe Heizleistung ermöglicht, sowie einen entsprechend geeigneten Kältemittelkreislauf zu schaffen.

Diese Aufgabe wird durch die Merkmale der Patentansprüche 1 bzw. 17 gelöst. Vorteilhafte Ausgestaltungen und Weiterbildungen der Erfindung sind den Unteransprüchen zu entnehmen.

Ausgangspunkt der Erfindung ist die Idee, durch die Konzeption des Kältemittelkreislaufs und durch eine geeignete Betriebsstrategie sicherzustellen, dass (insbesondere bei niedrigen Außentemperaturen) der vom Kältemittelverdichter angesaugte und verdichtete Kältemittelmassenstrom bzw. die Dichte des vom Kältemittelverdichter geförderten Kältemittels möglichst hoch ist.

Prinzipiell könnte in Betracht gezogen werden, den Kältemittelvolumenstrom über eine Drehzahlanpassung des Kältemittelverdichters zu regeln. Der Kältemittelmassenstrom hängt allerdings nicht nur vom Kältemittelvolumenstrom des Verdichters, sondern auch von der Dichte des Kältemittels am Eintritt des Kältemittelverdichters ab. Im Übrigen kann der Kältemittelstrom nicht beliebig gesteigert werden, da ansonsten die Temperatur am Verdampfer bzw. an den Verdampfern des Kältemittelkreislaufs zu stark absinken würde.

Durch die vorliegende Erfindung lassen sich beide Probleme lösen.

Ein Kältemittelkreislauf gemäß der Erfindung weist einen Kältemittelverdichter auf, der Kältemittel ansaugt, verdichtet und durch eine "Kältemittel-/Heizungswärmetauschereinrichtung" oder zusätzlichen einen Kondensator/Gaskühler im Klimagerät pumpt. Die "Kältemittel-/Heizungswärmetauschereinrichtung" kann z.B. eine "Kältemittel-/Flüssigkeitswärmetauschereinrichtung" sein, über die Wärme von dem Kältemittel an eine in einem Heizkreis umgepumpte Flüssigkeit übertragen wird, oder eine "Kältemittel-/Luftwärmetauschereinrichtung", über die Wärme von dem Kältemittel (ohne einen zwischengeschalteten von Flüssigkeit durchströmten Heizkreislauf) an die in einen Fahrgastraum einströmende Luft übertragen wird.

Von der Kältemittel-/Heizungswärmetauschereinrichtung kommendes Kältemittel wird in mindestens einem ersten Expansionsorgan entspannt. Das entspannte Kältemittel durchströmt mindestens einen Verdampfer des Kältemittelkreislaufs und strömt von dort zurück in Richtung zu einem Saugeingang des Verdichters.

Bei dem mindestens einen Verdampfer kann es sich beispielsweise um einen Umgebungswärmetauscher handeln, der Wärme aus der Umgebungsluft aufnimmt. Insbesondere können auch mehrere Verdampfer vorgesehen sein, z.B. ein Verdampfer, der eine Fahrzeugkomponente, wie z.B. einen Hochvoltspeicher o.ä., kühlt.

Der Kern der Erfindung besteht darin, dass an einer zwischen einem Kältemitteleingang und einem Kältemittelausgang der Kältemittel-/Heizungswärmetauschereinrichtung befindlichen Abzweigstelle der Kältemittel-Heizungsswärmetauschereinrichtung Kältemittel abgezweigt und über ein zweites Expansionsorgan in Richtung zu dem Saugeingang geleitet wird. Die Kältemittel-/Heizungswärmetauschereinrichtung kann eine Kältemittel-/Flüssigkeitswärmetauschereinrichtung sein, die das Kältemittel abkühlt und eventuell auch kondensiert, wobei die übertragene Wärme zur Beheizung des Innenraums über einen Heizkreislauf mit einem Heizungswärmeübertrager im Klimagerät genutzt wird. Alternativ dazu kann die Kältemittel-/Heizungswärmetauschereinrichtung eine Kältemittel - Luftwärmetauschereinrichtung sein, die das Kältemittel abkühlt und eventuell auch kondensiert, wobei diese Wärme zur Beheizung des Innenraums direkt im Klimagerät genutzt wird. Je nach Kältemittel erfolgt in der Kältemittel-/Heizungswärmetauschereinrichtung nur eine Abkühlung des Kältemittels oder auch zusätzlich eine Kondensation.

Dem von dem mindestens einen Verdampfer kommenden Kältemittelmassenstrom kann somit ein Kältemittelmassenstrom beigemischt werden, der von der Abzweigstelle der Kältemittel-/Heizungswärmetauschereinrichtung abgezweigt wird. Dadurch kann die Dichte des vom Kältemittelverdichter angesaugten Kältemittels bzw. der Kältemittelmassenstrom so eingestellt bzw. geregelt werden, dass sich auch bei niedrigen Außentemperaturen eine möglichst hohe Heizleistung ergibt.

Nach einer Weiterbildung der Erfindung ist in dem Abschnitt des Kältemittelkreislaufs, der sich zwischen der Abzweigstelle der Kältemittel-/Heizungswärmetauschereinrichtung und dem Saugeingang des Kältemittelverdichters befindet, ein zweites Expansionsorgan vorgesehen.

Die Kältemittel-/Heizungswärmetauschereinrichtung kann gedanklich in einen "ersten Abschnitt" untergliedert werden, der sich vom Kältemitteleingang bis zur Abzweigstelle erstreckt. In diesem ersten Abschnitt wird das durch den Kältemittelverdichter verdichtete und erhitzte Kältemittel abgekühlt, wobei vorgesehen sein kann, dass es auf dem gesamten ersten Abschnitt gasförmig, d.h. überhitzt, bleibt. Dementsprechend könnte der erste Abschnitt der Kältemittel-/Heizungswärmetauschereinrichtung als "Enthitzer" bezeichnet werden, über den gasförmiges Kältemittel abgekühlt wird.

Ein "zweiter Abschnitt" der Kältemittel-/Heizungswärmetauschereinrichtung ist durch den zwischen der Abzweigstelle und dem Kältemittelausgang befindlichen Abschnitt gebildet. Auf diesem Abschnitt gibt das Kältemittel weiter Wärme ab und kondensiert je nach Kältemittel bzw. wird überkritisch weiter abgekühlt. Der zweite Abschnitt könnte als "Kondensator oder Gaskühler" bezeichnet werden, indem das vom ersten Abschnitt kommende, gasförmige Kältemittel ganz oder teilweise kondensiert bzw. überkritisch abgekühlt wird.

Nach einer Weiterbildung der Erfindung ist der Kältemittelkreislauf über die Kältemittel-/Heizungswärmetauschereinrichtung (in diesem Zusammenhang Kältemittel-/Flüssigkeitswärmetauschereinrichtung) thermisch mit einem von Flüssigkeit durchströmten Heizkreislauf gekoppelt. Bei der Kältemittel-/Flüssigkeitswärmetauschereinrichtung kann es sich um eine Wärmetauscher-Einrichtung handeln, die von Kältemittel und Flüssigkeit im Gegenstrom durchströmt ist (Gegenstromwärmetauscher). Der oben erwähnte Enthitzer-Abschnitt und der Kondensator- oder Gaskühler-Abschnitt können durch zwei Abschnitte eines einzigen Gegenstrom-Wärmetauschers gebildet sein. Alternativ dazu können der Enthitzer und der Kondensator bzw. Gaskühler auch durch zwei separate, in Reihe geschaltete Gegenstromwärmetauscher gebildet sein.

Der Heizkreislauf weist eine Kühlmittel- bzw. Wasserpumpe, die beiden Abschnitte (Enthitzer-Abschnitt und Kondensator- bzw. Gaskühler-Abschnitt) der Kältemittel-/Flüssigkeitswärmetauschereinrichtung und einen Heizungswärmetauscher auf. Bei dem Heizungswärmetauscher, der sich normalerweise im Klimagerät befindet, handelt es sich um einen Flüssigkeits-/Luftwärmetauscher, über den Wärme von der Flüssigkeit bzw. dem Wasser an die in einen Fahrgastraum eines Fahrzeugs einströmende Luft abgegeben werden kann.

Nach einer anderen Weiterbildung der Erfindung ist die Kältemittel-/Heizungswärmetauschereinrichtung als eine Kältemittel-/Luftwärmetauschereinrichtung ausgebildet. Der Kältemittelkreislauf gibt hier die Heizwärme über die Kältemittel-/Luftwärmetauschereinrichtung, die sich normalerweise im Klimagerät befindet, direkt an die in einen Fahrgastraum eines Fahrzeugs einströmende Luft ab. Hierbei können die beiden Teile der Kältemittel-/Luftwärmetauschereinrichtung luftseitig in Serie geschaltet sein, wobei vorzugsweise der erste Teil nach dem zweiten Teil luftseitig durchströmt wird.

Nach einer Weiterbildung der Erfindung ist nach dem Kältemittelausgang des Kältemittel-/Heizungswärmetauschereinrichtung, d.h. zwischen der Kältemittel-/Heizungswärmetauschereinrichtung und dem mindestens einen ersten Expansionsorgan eine weitere Abzweigstelle vorgesehen, welche über ein drittes Expansionsorgan mit dem Saugeingang des Kältemittelverdichters in Fluidverbindung steht.

Bei dem zweiten und/oder dem dritten Expansionsorgan kann es sich vorzugsweise um regelbare Expansionsorgane handeln. Alternativ dazu kann es sich auch um einfache Expansionsorgane mit festem Strömungsquerschnitt handeln, die jeweils geöffnet - oder geschlossen werden können.

Im Folgenden wird die Erfindung im Zusammenhang mit der Zeichnung näher erläutert. Es zeigen:
- Figur 1: Ein erstes Ausführungsbeispiel eines Kältemittelkreislaufs gemäß der Erfindung;
- Figur 2: ein vereinfachtes log(p)-h-Diagramm zur Erläuterung einzelner Zustandspunkte eines Kältemittels;
- Figur 3: ein vereinfachtes log(p)-h-Diagramm zur Erläuterung einzelner Zustandspunkte eines Kältemittels mit überkritischer Betriebsweise;
- Figuren 4, 5: weitere Ausführungsbeispiele eines Kältemittelkreislaufs gemäß der Erfindung.

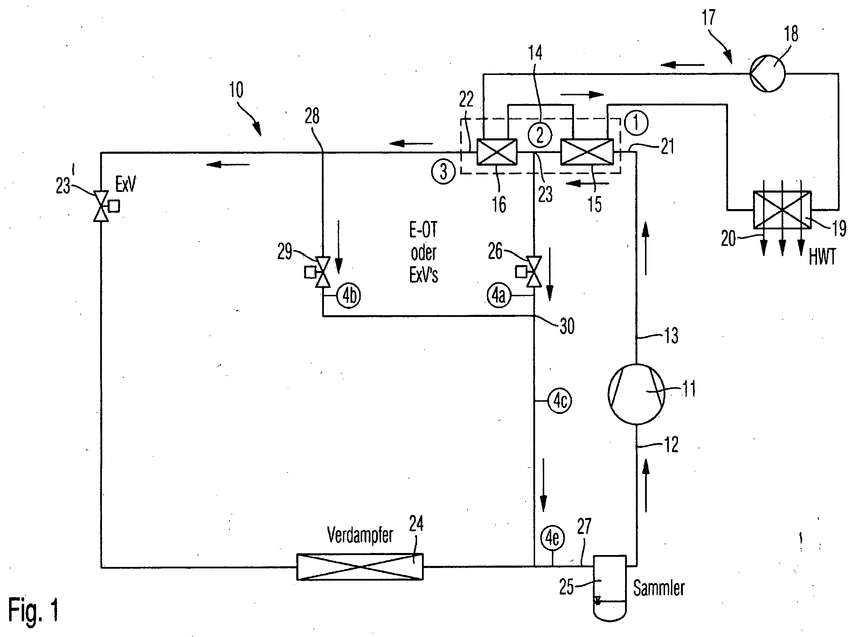

Figur 1 zeigt eine Kältemittelkreislauf 10, der einen Kältemittelverdichter 11 aufweist. Der Kältemittelverdichter 11 saugt über einen Saugeingang 12 Kältemittel an, verdichtet dieses und pumpt das verdichtete Kältemittel über einen Druckausgang 13 zu einer Kältemittel-/Flüssigkeitswärmetauschereinrichtung 14.

Bei dem hier gezeigten Ausführungsbeispiel ist die Kältemittel-/Flüssigkeitswärmetauschereinrichtung 14 durch zwei in Serie geschaltete Gegenstromwärmetauscher 15, 16 gebildet. Über die Kältemittel-/Flüssigkeitswärmetauschereinrichtung 14 ist der Kältemittelkreislauf 10 thermisch mit einem Heizkreislauf 17 gekoppelt. Der Heizkreislauf 17 weist eine Wasserpumpe 18 auf, welche Heizflüssigkeit bzw. Wasser entgegen der Strömungsrichtung des Kältemittels zunächst durch den Wärmetauscher 16 und dann durch den Wärmetauscher 15 und schließlich durch einen Heizwärmetauscher 19 pumpt. Über die Kühlmittel-Flüssigkeitswärmetauscher-Einrichtung 14 kann Wärme von dem durch den Kältemittelmittelverdichter 11 komprimierten Kältemittel an die im Heizkreislauf 17 umgepumpte Flüssigkeit abgegeben werden. Über den Heizwärmetauscher 19 kann Wärme aus der im Heizkreislauf 17 umgepumpten Flüssigkeit an eine in einen Fahrgastraum eines Fahrzeugs einzublasende Luft 20, welche den Heizwärmetauscher 19 durch- und/oder umströmt, abgegeben werden.

Der Wärmetauscher 15 fungiert als Enthitzer, der in Serie dazu geschaltete Wärmetauscher 16 fungiert als Kondensator bzw. bei einem Kältemittel in überkritischer Betriebsweise als Gaskühler. Kältemittel, welches durch den Kältemittelverdichter 11 verdichtet und erhitzt wurde, gibt zunächst über den Wärmetauscher 15 Wärme ab. Das Kältemittel verbleibt dabei im gasförmigen Zustand, kühlt sich jedoch ab. Im Wärmetauscher 16 wird das Kältemittel weiter abgekühlt und je nach Kältemittel dabei teilweise oder vollständig kondensiert bzw. überkritisch abgekühlt.

Die Kühlmittel-Flüssigkeitswärmetauscher-Einrichtung 14 weist einen Kältemitteleingang 21, einen Kältemittelausgäng 22 und eine Abzweigstelle 23 auf. Die Abzweigstelle 23 befindet sich, in Strömungsrichtung des Kältemittels betrachtet, zwischen dem Kältemitteleingang 21 und dem Kältemittelausgang 22. Bei dem hier gezeigten Ausführungsbeispiel, bei dem die Kältemittel-/Flüssigkeitswärmetauschereinrichtung 14 durch zwei separate Wärmetauscher 15, 16 gebildet ist, befindet sich die Abzweigstelle 23 zwischen den beiden Wärmetauschern 15, 16.

Alternativ zu dem hier gezeigten Ausführungsbeispiel können der "Enthitzer-Abschnitt 15" und der "Kondensator-Abschnitt 16" auch in einem einzigen Wärmetauscher zusammengefasst sein. In diesem Fall befände sich die Abzweigstelle 23 in dem Wärmetauscher.

Vom Kältemittelausgang 22 kommendes Kältemittel strömt zu einem ersten Expansionsorgan 23', das hier als elektrisch bzw. elektronisch steuerbares bzw. regelbares Expansionsorgan ausgebildet wird. Im Expansionsorgan 23' wird das Kältemittel entspannt, wodurch es sich abkühlt. Das entspannte Kältemittel durchströmt anschließend einen Verdampfer bzw. Umgebungswärmetauscher 24. Anstatt eines einzigen Verdampfers können auch mehrere Verdampfer vorgesehen und z.B. parallel geschaltet sein. Im Verdampfer 24 nimmt das Kältemittel Wärme auf, z.B. aus der Umgebungsluft oder aus einer zu kühlenden Fahrzeugkomponente. Nach Durchströmen des Verdampfers 24 strömt das Kältemittel über einen Sammler 25 zurück zum Saugeingang 12 des Verdichters 11.

Wie aus Figur 1 ersichtlich ist, steht die Abzweigstelle 23 der Kältemittel-/Flüssigkeitswärmetauschereinrichtung 14 über ein steuerbares bzw. regelbares Expansionsorgan 26, welches im Folgenden als zweites Expansionsorgan bezeichnet wird, in Strömungsverbindung mit einem Eingang 27 des Sammlers 25.

Eine zwischen dem Ausgang 22 und dem ersten Expansionsorgan 23' vorgesehene Abzweigstelle 28 steht über ein drittes Expansionsorgan 29, das hier ebenfalls als steuerbares bzw. regelbares Expansionsorgan ausgebildet ist, in Strömungsverbindung mit dem Eingang 27 des Sammlers 25.

Am Sammlereingang 27 kann ein Temperatursensor und/oder ein Drucksensor (nicht dargestellt) vorgesehen sein. Eine hier nicht näher dargestellte Elektronik regelt die steuerbaren Expansionsorgane 26, 29 so, dass am Eingang 27 des Sammlers 25 keine oder nur eine geringe Überhitzung des Kältemittels auftritt, wodurch erreicht wird, dass die Dichte des vom Kältemittelverdichter 11 geförderten Kältemittels vergleichsweise hoch und dementsprechend auch der vom Kältemittelverdichter 11 geförderte Kältemittelmassenstrom hoch ist. Dadurch kann auch bei niedrigen Außentemperaturen, d.h. bei Außentemperaturen, bei denen über einen Umgebungswärmetauscher bzw. Verdampfer 24 nur vergleichsweise geringe Wärmeleistung aufgenommen wird, eine hinreichend hohe, zur Beheizung eines Fahrzeugs ausreichende Wärmeleistung erzeugt werden. Insbesondere ist dadurch auch eine höhere Drehzahl des Verdichters möglich.

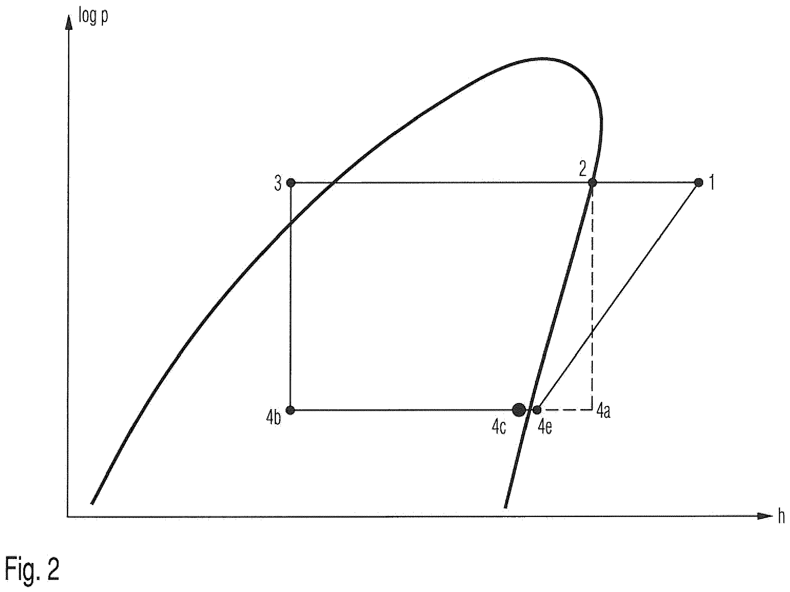

Figur 2 zeigt ein Diagramm, bei dem auf der Abszisse die Enthalpie eines Kältemittels und auf der Ordinate logarithmisch der Druck dieses Kältemittels, bei dem bei der Wärmeabgabe eine Kondensation auftritt, aufgetragen ist. Die Ziffern 1, 2, 3, 4a, 4b und 4c bezeichnen verschiedene Zustände des Kältemittels (vgl. Fig. 1). Das Bezugszeichen 1 repräsentiert den Zustand des verdichteten, erhitzten Kältemittels, d.h. den Zustand des Kältemittels am Eingang 21 der Kältemittel-/Heizungswärmetauschereinrichtung 14. In dem Enthitzer 15 wird das Kältemittel isobar abgekühlt, was dem Zustand 2 an der Abzweigstelle 23 entspricht. Im Kondensator 16 wird das Kältemittel 15 kondensiert und weiter isobar abgekühlt. Der Zustand 3 entspricht somit dem Zustand des Kältemittels am Kältemittelausgang 22 der Kältemittel-/Heizungswärmetauschereinrichtung 14.

Kältemittel des Zustands 2 wird über das zweite Expansionsorgan 26 auf einen Zustand 4a entspannt. Kältemittel des Zustands 3 wird über das dritte Expansionsorgan 29 auf einen Zustand 4b entspannt. Kältemittel der beiden Zustände 4a, 4b vermischt sich an der Vereinigungsstelle 30 zu Kältemittel des Zustands 4c. Kältemittel des Zustands 4c vermischt sich mit dem vom Verdampfer 24 kommenden Kältemittel zu einem Zustand 4e, in dem es in den Sammler 25 eintritt.

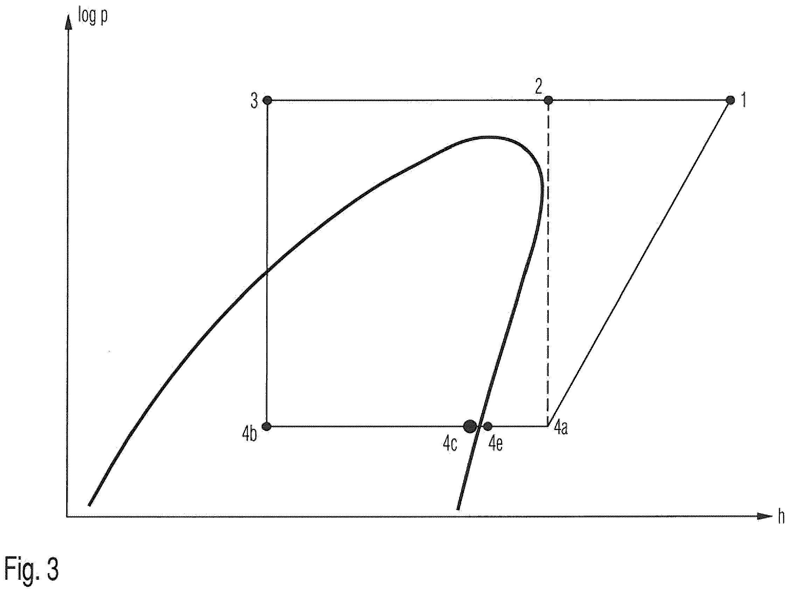

Figur 3 zeigt die Zustandspunkte für den Fall, dass das Kältemittel eine überkritische Abkühlung erfordert, wie dies beispielsweise bei dem Kältemittel Kohlendioxid sein kann. Im Unterschied zu Figur 2 wird das Kältemittel im ersten Teil der Kältemittel-/Heizungswärmetauschereinrichtung soweit auf Punkt 2 abgekühlt, dass bei Expansion auf den Punkt 4a entweder eine ausreichende Überhitzung vorliegt oder der Punkt 4a zumindest rechts vom Punkt 4c liegt. Die weitere Abkühlung zum Punkt 3 erfolgt in dem zweiten Teil der Kältemittel-/Heizungswärmetauschereinrichtung auf einer überkritischen Isobare.

Wie bereits erwähnt, werden die Expansionsorgane 26, 29 so gesteuert, dass sich auch bei niedrigen Umgebungstemperaturen eine ausreichend hohe Heizleistung bei einem möglichst hohen Gesamtwirkungsgrad ergibt.

Eine erste Regelstrategie lässt durch Öffnen des Ventils 26 so viel Kältemittel durch, dass der Kältemittelverdichter mit einer möglichst hohen Drehzahl und damit auch hoher Leistung verdichten kann.

Bei einer zweiten Regelstrategie wird durch Öffnen des Ventils 29 so viel Kältemittel des Zustands 4b zugemischt, dass das vom Kältemittelverdichter angesaugte Kältemittel einen Zustand 4e mit möglichst hoher Dichte aufweist. Somit wird durch beide Strategien ein Maximum an Heizleistung bei eine festgelegten maximalen Leistung der einzelnen Verdampfer generiert.

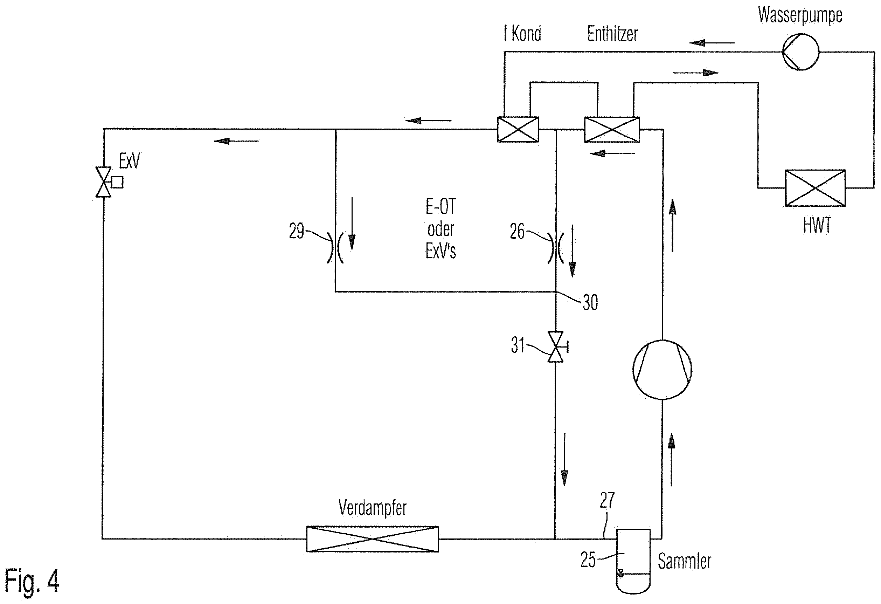

Figur 4 zeigt ein Ausführungsbeispiel, bei dem anstelle regelbarer Expansionsorgane 26, 29 nicht regelbare Drosseln bzw. je ein Orifice-Ventil vorgesehen sind. Zusätzlich ist hier zwischen der Vereinigungsstelle 30 und dem Eingang 27 des Sammlers 25 ein Absperrventil 31 angeordnet. Im Übrigen entspricht die Anordnung der Figur 3 der der Figur 1.

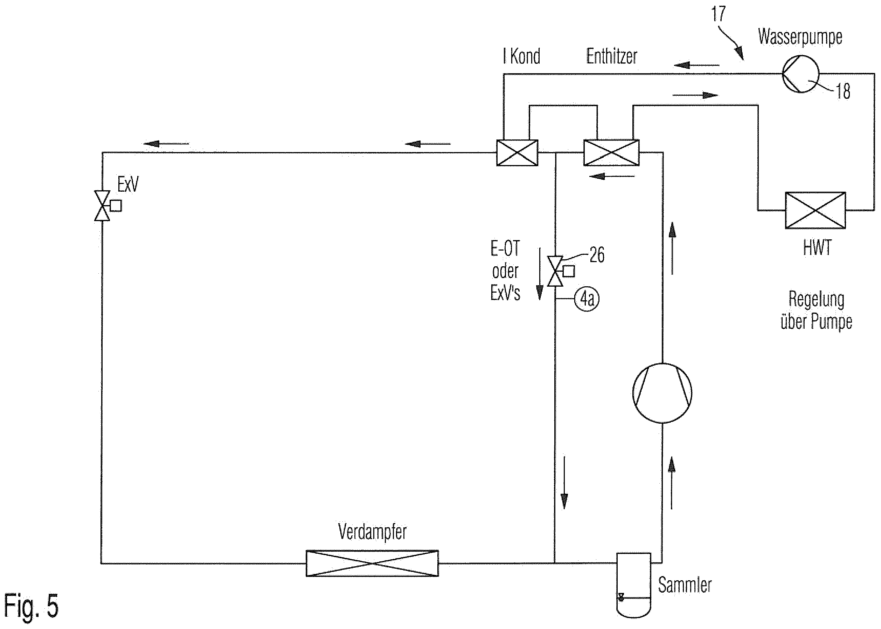

Figur 5 zeigt ein Ausführungsbeispiel, bei dem im Unterschied zu Figur 1 der Kältemittelpfad zwischen der Abzweigstelle 28 und der Vereinigungsstelle 30 fortgelassen ist. Es ist also kein drittes Expansionsorgan vorgesehen, sondern lediglich das zweite Expansionsorgan 26. Der Zustand 4a des Kältemittels nach dem zweiten Expansionsorgan 26 kann hier durch eine Steuerung des den Heizkreislaufs 17 durchströmenden Flüssigkeitsvolumenstrom, d.h. durch Steuern der Drehzahl der Wasserpumpe 18 geregelt werden. Durch Steuern des Expansionsorgans 26 wird der Massenstrom des zusätzlichen Kältemittels für den Kältemittelverdichter und damit die maximale mögliche Drehzahl des Verdichters gesteuert.

## Patentansprüche

1. Verfahren zum Betreiben eines Kältemittelkreislaufs (10) als Wärmepumpe, wobei
• mittels eines Verdichters Kältemittel verdichtet und durch eine Wärmetauschereinrichtung (14) gepumpt wird,
• von der Wärmetauschereinrichtung (14) kommendes Kältemittel in mindestens einem ersten Expansionsorgan (23') entspannt wird,
• über das erste Expansionsorgan (23') entspanntes Kältemittel durch mindestens einen Verdampfer (24) zu einem Saugeingang (12) des Verdichters (11) strömt,
wobei an einer zwischen einem Kältemitteleingang (21) und einem Kältemittelausgang (22) der Wärmetauschereinrichtung (14) befindlichen Abzweigstelle (23) der Wärmetauschereinrichtung (14) Kältemittel abgezweigt und über ein zweites Expansionsorgan (26) und unter Umgehung
- eines stromabwärts des Kältemittelabzweigs (23) befindlichen Abschnitts (16) der Wärmetauschereinrichtung (14) und
- des mindestens einen ersten Expansionsorgans (23') und
- des mindestens einen Verdampfers (24)
in Richtung zu dem Saugeingang (12) geleitet wird,
**dadurch gekennzeichnet, dass**
• die Wärmetauschereinrichtung (14) eine Kältemittel-/Heizungswärmetauschereinrichtung ist,
• wobei von dem Kältemittel über die Kältemittel-/Heizungswärmetauschereinrichtung (14) abgegebene Wärme zur Beheizung eines Fahrgastraums eines Fahrzeugs genutzt wird.

2. Verfahren nach Anspruch 1,
**dadurch gekennzeichnet, dass** das Kältemittel in zwischen dem Kältemitteleingang (21) und der Abzweigstelle (23) abgekühlt wird.

3. Verfahren nach Anspruch 2,
**dadurch gekennzeichnet, dass** das Kältemittel zwischen der Abzweigstelle (23) und dem Kältemittelausgang (22) weiter abgekühlt wird, so dass es kondensiert.

4. Verfahren nach einem der Ansprüche 1 bis 3,
**dadurch gekennzeichnet, dass** das Kältemittel zwischen der Abzweigstelle (23) und dem Kältemittelausgang (22) weiter überkritisch abgekühlt wird.

5. Verfahren nach einem der Ansprüche 1 bis 4,
**dadurch gekennzeichnet, dass** der Kältemittelkreislauf (10) über die Kältemittel-/Heizungswärmetauschereinrichtung (14) thermisch mit einem von Flüssigkeit durchströmten Heizkreislauf (17) gekoppelt ist wobei die Kältemittel-/Heizungswärmetauschereinrichtung (14) eine Kältemittel-/Flüssigkeitswärmetauschereinrichtung (14) ist.

6. Verfahren nach Anspruch 5,
**dadurch gekennzeichnet, dass** der Heizkreislauf (17) eine Flüssigkeitspumpe (18) aufweist, deren Förderleistung verstellbar ist.

7. Verfahren nach einem der Ansprüche 1 bis 4,
**dadurch gekennzeichnet, dass** die Kältemittel-/Heizungswärmetauschereinrichtung (14) eine Kältemittel-/ Luftwärmetauschereinrichtung ist, die die Wärme direkt an einen zu erwärmenden Luftstrom abgibt.

8. Verfahren nach Anspruch 7,
**dadurch gekennzeichnet, dass** die
die beiden Teile der Kältemittel-/Luftwärmetauschereinrichtung luftseitig in Serie geschaltet sind, wobei vorzugsweise der erste Teil nach dem zweiten Teil luftseitig durchströmt wird.

9. Verfahren nach einem der Ansprüche 1 bis 8,
**dadurch gekennzeichnet, dass** nach dem Kältemittelausgang (22) der Kältemittel-/Heizungswärmetauschereinrichtung (14) Kältemittel abgezweigt und über ein drittes Expansionsorgan (29) in Richtung zu dem Saugeingang (11) geleitet wird.

10. Verfahren nach einem der Ansprüche 1 bis 9,
**dadurch gekennzeichnet, dass** von dem mindestens einen Verdampfer (24) kommendes Kältemittel über einen Sammler (25) zu dem Saugeingang (12) geleitet wird.

11. Verfahren nach Anspruch 10,
**dadurch gekennzeichnet, dass** von dem zweiten Expansionsorgan (26) kommendes Kältemittel über den Sammler (25) zu dem Saugeingang (12) strömt.

12. Verfahren nach einem der vorangehenden Ansprüche,
**dadurch gekennzeichnet, dass** von dem dritten Expansionsorgan (29) kommendes Kältemittel über den Sammler (25) zu dem Saugeingang strömt.

13. Verfahren nach einem der vorangehenden Ansprüche,
**dadurch gekennzeichnet, dass** die Dichte des Kältemittels am Saugeingang (12) des Verdichters (11) und/oder der Kältemittelmassenstrom am Saugeingang (12) durch Steuern
- des zweiten Expansionsorgans (26) und/oder
- des dritten Expansionsorgans (29) und/oder
- der Drehzahl des Verdichters (11) geregelt wird.

14. Verfahren nach einem der Ansprüche 7 bis 13,
**dadurch gekennzeichnet, dass** an oder vor einem Kältemitteleingang (27) des Sammlers (25)
- mittels eines Drucksensors der Druck des Kältemittels gemessen wird und/oder
- mittels eines Temperatursensors die Temperatur des Kältemittels gemessen und daraus die Dichte des Kältemittels ermittelt wird.

15. Verfahren nach Anspruch 14,
**dadurch gekennzeichnet, dass** das zweite und/oder das dritte Expansionsorgan (26, 29) in Abhängigkeit von dem Druck und/oder der Temperatur des Kältemittels gesteuert bzw. geregelt wird.

16. Verfahren nach einem der vorangehenden Ansprüche,
**dadurch gekennzeichnet, dass** die Dichte des Kältemittels am Eingang des Expansionsorgans (26) durch die Drehzahl der Wasserpumpe 18 geregelt wird.

17. Als Wärmepumpe betreibbarer Kältemittelkreislauf mit
- einem Verdichter (11),
- einer in Strömungsrichtung des Kältemittels nach dem Verdichter angeordneten Wärmetauschereinrichtung (14),
- welche einen mit der Druckseite (13) des Verdichters (11) in Fluidverbindung stehenden Kältemitteleingang (21) und
- einen Kältemittelausgang (22) aufweist,
- mindestens einem ersten mit dem Kältemittelausgang (22) in Strömungsverbindung stehenden ersten Expansionsorgan (23'),
- mindestens einem im Strömungsrichtung des Kältemittels nach dem ersten Expansionsorgan angeordneten Verdampfer (24), von dem Kältemittel zu einem Saugeingang (12) des Verdichters (11) strömt,
- wobei die Wärmetauschereinrichtung (14) an einer zwischen dem Kältemitteleingang (21) und dem Kältemittelausgang (22) befindlichen Stelle einen Kältemittelabzweig (23) aufweist, über den Kältemittel über ein zweites Expansionsorgan (26) und unter Umgehung
- eines stromabwärts des Kältemittelabzweigs (23) befindlichen Abschnitts (16) der Wärmetauschereinrichtung (14) und
- des mindestens einen ersten Expansionsorgans (23') und
- des mindestens einen Verdampfers (24)
zur Saugseite (12) des Verdichters strömt,
**dadurch gekennzeichnet, dass**
• die Wärmetauschereinrichtung (14) eine Kältemittel-/Flüssigkeitswärmetauschereinrichtung (14) ist, wobei
• der Kältemittelkreislauf über die Kältemittel-/Flüssigkeitswärmetauschereinrichtung (14) thermisch mit einem von Flüssigkeit durchströmten Heizkreislauf (17) gekoppelt ist.

18. Kältemittelkreislauf nach Anspruch 17,
**dadurch gekennzeichnet, dass** ein Sammler (25) vorgesehen ist, der zwischen dem mindestens einen Verdampfer (24) und dem Saugeingang (12) bzw. zwischen dem Kältemittelabzweig (23) und dem Saugeingang (12) angeordnet ist.

19. Kältemittelkreislauf nach Anspruch 18,
**dadurch gekennzeichnet, dass** zwischen dem Kältemittelabzweig (23) und dem Sammler (25) ein zweites Expansionsorgan (26) angeordnet ist.

20. Kältemittelkreislauf nach einem der Ansprüche 18 oder 19,
**dadurch gekennzeichnet, dass** der Kältemittelausgang (22) der Kältemittel-/Flüssigkeitswärmetauschereinrichtung (14) über ein drittes Expansionsorgan (29) mit dem Sammler (25) verbunden ist.

21. Kältemittelkreislauf nach Anspruch 20,
**dadurch gekennzeichnet, dass** es sich bei dem zweiten und/oder dem dritten Expansionsorgan (26, 29) um ein regelbares Expansionsorgan handelt.

22. Kältemittelkreislauf nach Anspruch 20,
**dadurch gekennzeichnet, dass** es sich bei dem zweiten und/oder dem dritten Expansionsorgan (26, 29) um eine Drossel mit festem Strömungsquerschnitt handelt.

23. Kältemittelkreislauf nach einem der Ansprüche 17 bis 22,
**dadurch gekennzeichnet**, der Heizkreislauf (17) eine Pumpe (18) aufweist, deren Förderleistung verstellbar ist.

## Claims

1. A method for operating a refrigerant circuit (10) as a heat pump, wherein
ð refrigerant is compressed and is pumped through a heat-exchanger device (14) by means of a compressor,
ð refrigerant coming from the heat-exchanger device (14) is expanded in at least one first expansion member (23'),
ð refrigerant which has been expanded by means of the first expansion member (23') flows through at least one evaporator (24) to a suction input (12) of the compressor (11),
wherein refrigerant is branched off at a branch-off point (23) of the heat-exchanger device (14) located between a refrigerant input (21) and a refrigerant output (22) of the heat-exchanger device (14) and is conducted via a second expansion member(26), and bypassing
- a portion (16) of the heat-exchanger device (14) which is located downstream from the refrigerant branch-off (23), and
- the at least one first expansion member (23'), and
- the at least one evaporator (24),
in the direction of the suction input (12),
**characterised in that**
ð the heat-exchanger device (14) is a refrigerant/heating heat-exchanger device,
ð with heat emitted from the refrigerant via the refrigerant/heating heat-exchanger device (14) being utilised to heat a passenger compartment of a vehicle.

2. A method according to Claim 1,
**characterised in that** the refrigerant is cooled between the refrigerant input (21) and the branch-off point (23).

3. A method according to Claim 2,
**characterised in that** the refrigerant is cooled further between the branch-off point (23) and the refrigerant output (22), so that it condenses.

4. A method according to one of Claims 1 to 3,
**characterised in that** the refrigerant is cooled further supercritically between the branch-off point (23) and the refrigerant output (22).

5. A method according to one of Claims 1 to 4,
**characterised in that** the refrigerant circuit (10) is thermally coupled by means of the refrigerant/heating heat-exchanger device (14) with a heating circuit (17) through which liquid flows, the refrigerant/heating heat-exchanger device (14) being a refrigerant/liquid heat-exchanger device (14).

6. A method according to Claim 5,
**characterised in that** the heating circuit (17) has a liquid pump (18), the delivery rate of which is adjustable.

7. A method according to one of Claims 1 to 4,
**characterised in that** the refrigerant/heating heat-exchanger device (14) is a refrigerant/air heat-exchanger device which emits the heat directly to an air flow which is to be heated.

8. A method according to Claim 7, **characterised in that** the two parts of the refrigerant/air heat-exchanger device are connected in series on the air side, with preferably the flow passing through the first part after the second part on the air side.

9. A method according to one of Claims 1 to 8,
**characterised in that** refrigerant is branched off after the refrigerant output (22) of the refrigerant/heating heat-excha nger device (14) and is conducted via a third expansion member (29) in the direction of the suction input (11).

10. A method according to one of Claims 1 to 9,
**characterised in that** refrigerant coming from the at least one evaporator (24) is conducted to the suction input (12) via a collector (25).

11. A method according to Claim 10,
**characterised in that** refrigerant coming from the second expansion member (26) flows via the collector (25) to the suction input (12).

12. A method according to one of the preceding claims,
**characterised in that** refrigerant coming from the third expansion member (29) flows via the collector (25) to the suction input (12).

13. A method according to one of the preceding claims,
**characterised in that** the density of the refrigerant at the suction input (12) of the compressor (11) and/orthe refrigerant mass flow at the suction input (12) is regulated by controlling
- the second expansion member (26) and/or
- the third expansion member (29) and/or
- the speed of the compressor (11).

14. A method according to one of Claims 7 to 13,
**characterised in that** at or before a refrigerant input(27) of the collector(25)
- the pressure of the refrigerant is measured by means of a pressure sensor, and/or
- the temperature of the refrigerant is measured by means of a temperature sensor and the density of the refrigerant is ascertained therefrom.

15. A method according to Claim 14,
**characterised in that** the second and/or the third expansion member (26, 29) is controlled or regulated as a function of the pressure and/or the temperature of the refrigerant.

16. A method according to one of the preceding claims,
**characterised in that** the density of the refrigerant at the entrance to the expansion member (26) is regulated by the speed of the water pump (18).

17. A refrigerant circuit which can be operated as a heat pump, having
- a compressor (11),
- a heat-exchanger device (14) arranged in the direction of flow of the refrigerant after the compressor,
- which device has a refrigerant input (21) which is in fluidic connection with the pressure side (13) of the compressor (11) and
- a refrigerant output (22);
- at least a first expansion member (23') which is in a flow connection with the refrigerant output (22),
- at least one evaporator (24) arranged in the direction of flow of the refrigerant after the first expansion member, from which evaporator refrigerant flows to a suction input (12) of the compressor (11),
- wherein the heat-exchanger device (14) at a point located between the refrigerant input (21) and the refrigerant output (22) has a refrigerant branch-off (23) via which refrigerant flows via a second expansion member(26), and bypassing
- a portion (16) of the heat-exchanger device (14) located downstream from the refrigerant branch-off (23), and
- the at least one first expansion member (23'), and
- the at least one evaporator (24) to the suction side (12) of the compressor,
**characterised in that**
ð the heat-exchanger device (14) is a refrigerant/liquid heat-exchanger device (14), with
ð the refrigerant circuit being thermally coupled via the refrigerant/liquid heat-exchanger device (14) to a heating circuit (17) through which liquid flows.

18. A refrigerant circuit according to Claim 17,
**characterised in that** a collector(25) is provided which is arranged between the at least one evaporator (24) and the suction input (12) or between the refrigerant branch-off (23) and the suction input (12).

19. A refrigerant circuit according to Claim 18,
**characterised in that** a second expansion member (26) is arranged between the refrigerant branch-off (23) and the collector (25).

20. A refrigerant circuit according to one of Claims 18 or 19,
**characterised in that** the refrigerant output (22) of the refrigerant/liquid heat-exchanger device (14) is connected to the collector (25) via a third expansion member (29).

21. A refrigerant circuit according to Claim 20,
**characterised in that** the second and/or the third expansion member (26, 29) is a expansion memberwhich can be regulated.

22. A refrigerant circuit according to Claim 20,
**characterised in that** the second and/or the third expansion member (26, 29) is a throttle with a fixed flow cross-section.

23. A refrigerant circuit according to one of Claims 17 to 22,
**characterised in that** the heating circuit (17) has a pump (18), the delivery rate of which is adjustable.

## Revendications

1. Procédé permettant de faire fonctionner un circuit de fluide de refroidissement (10) en tant que pompe à chaleur, selon lequel :
• un fluide de refroidissement est comprimé au moyen d'un compresseur et est pompé au travers d'un dispositif échangeur de chaleur (14),
• le fluide de refroidissement provenant du dispositif échangeur de chaleur (14) et détendu dans au moins un premier organe de détente (23'),
• le fluide de refroidissement détendu par le premier organe de détente (23') passe au travers d'au moins un évaporateur (24) pour être transféré vers une entrée d'aspiration (12) du compresseur (11),
au niveau d'un point de dérivation (23) du dispositif échangeur de chaleur (14) situé entre l'entrée (21) du fluide de refroidissement et la sortie (22) du fluide de refroidissement dans ce dispositif échangeur de chaleur (14), du fluide de refroidissement est dérivé et transféré en direction de l'entrée d'aspiration (12) en passant dans un second organe de détente (26), ce en contournant :
- un segment (16) du dispositif échangeur de chaleur (14) situé en aval de la dérivation (23) du fluide de refroidissement,
- le premier organe de détente (23'), et
- le compresseur (24),
**caractérisé en ce que**
• le dispositif échangeur de chaleur (14) est un dispositif échangeur de chaleur fluide de refroidissement/chauffage,
• la chaleur dissipée par le fluide de refroidissement dans le dispositif échangeur de chaleur (14) fluide de refroidissement/chauffage étant utilisé pour chauffer l'habitacle d'un véhicule.

2. Procédé conforme à la revendication 1,
**caractérisé en ce que**
le fluide de refroidissement est refroidi entre son entrée (21) et le point de dérivation (23).

3. Procédé conforme à la revendication 2,
**caractérisé en ce que**
le fluide de refroidissement est encore refroidi entre le point de dérivation (23) et sa sortie (22) de sorte qu'il se condense.

4. Procédé conforme à l'une des revendications 1 à 3,
**caractérisé en ce que**
le fluide de refroidissement est encore refroidi dans un état surcritique entre le point de dérivation (23) et sa sortie (22).

5. Procédé conforme à l'une des revendications 1 à 4,
**caractérisé en ce que**
le circuit de fluide de refroidissement (10) est couplé thermiquement par l'intermédiaire du dispositif échangeur de chaleur (14) fluide de refroidissement/chauffage avec un circuit de chauffage (17) parcouru par un liquide, le dispositif échangeur de chaleur fluide de refroidissement/chauffage étant un dispositif échangeur de chaleur fluide de refroidissement/liquide (14).

6. Procédé conforme à la revendication 5,
**caractérisé en ce que**
le circuit de chauffage (17) comporte une pompe à liquide (18) dont la puissance de refoulement peut être réglée.

7. Procédé conforme à l'une des revendications 1 à 4,
**caractérisé en ce que**
le dispositif échangeur de chaleur fluide (14) de refroidissement/chauffage est un dispositif échangeur de chaleur fluide de refroidissement/air qui délivre directement la chaleur à un flux d'air à chauffer.

8. Procédé conforme à la revendication 7,
**caractérisé en ce que**
les deux parties du dispositif échangeur de chaleur fluide de refroidissement/air sont montées en série côté air, et de préférence la première partie est parcourue par l'air après la seconde partie.

9. Procédé conforme à l'une des revendications 1 à 8,
**caractérisé en ce qu'**
après la sortie du fluide de refroidissement (22) du dispositif échangeur de chaleur fluide de refroidissement/chauffage (14), du fluide de refroidissement est dérivé et transféré vers l'entrée d'aspiration (11) par l'intermédiaire d'un troisième organe de détente (29).

10. Procédé conforme à l'une quelconque des revendications 1 à 9,
**caractérisé en ce que**
le fluide de refroidissement provenant du compresseur (24) est transféré vers l'entrée d'aspiration (12) en passant dans un collecteur (25).

11. Procédé conforme à la revendication 10,
**caractérisé en ce que**
le fluide de refroidissement provenant du second organe de détente (26) circule vers l'entrée d'aspiration (12) en passant dans le collecteur (25).

12. Procédé conforme à l'une des revendications précédentes,
**caractérisé en ce que**
le fluide de refroidissement provenant du troisième organe de détente (29) circule vers l'entrée d'aspiration en passant dans le collecteur (25).

13. Procédé conforme à l'une des revendications précédentes,
**caractérisé en ce que**
la densité du fluide de refroidissement à l'entrée d'aspiration (12) du compresseur (11) et/ou le débit massique du fluide de refroidissement à l'entrée d'aspiration (12) est(sont) réglé(es) par commande :
- du second organe de détente (26) et/ou
- du troisième organe de détente (29) et/ou
- de la vitesse de rotation du compresseur (11).

14. Procédé conforme à l'une des revendications 7 à 13,
**caractérisé en ce qu'**
au niveau ou à l'avant de l'entrée (27) du fluide de refroidissement dans le collecteur (25),
- la pression du fluide de refroidissement est mesurée au moyen d'un capteur de pression, et/ou
- la température du fluide de refroidissement est mesurée au moyen d'un capteur de température et par suite, la densité du fluide de refroidissement est déterminée.

15. Procédé conforme à la revendication 14,
**caractérisé en ce que**
le second organe de détente et/ou le troisième organe de détente (26, 29) est(sont) commandé(s) ou régulé(s) en fonction de la pression et/ou de la température du fluide de refroidissement.

16. Procédé conforme à l'une des revendications précédentes,
**caractérisé en ce que**
la densité du fluide de refroidissement à l'entrée de l'organe de détente (26) est régulée par la vitesse de rotation de la pompe à eau (18).

17. Circuit de fluide de refroidissement pouvant fonctionner en tant que pompe à chaleur comprenant :
- un compresseur (11),
- un dispositif échangeur de chaleur (14) monté en aval du compresseur dans la direction de circulation du fluide de refroidissement, qui comporte une entrée du fluide du refroidissement (21) en liaison fluidique avec le côté pression (13) du compresseur (11) et une sortie du fluide de refroidissement (22),
- au moins un premier organe de détente (23') en liaison fluidique avec la sortie (22) du fluide de refroidissement,
- au moins un évaporateur (24) monté en aval du premier organe de détente dans la direction de circulation du fluide de refroidissement, et à partir duquel le fluide de refroidissement circule vers l'entrée d'aspiration (12) du compresseur (11),
- le dispositif échangeur de chaleur (14) comprenant, au niveau d'un point situé entre l'entrée du fluide de refroidissement (21) et la sortie du fluide de refroidissement (22), une dérivation de ce fluide de refroidissement (23) par laquelle le fluide de refroidissement circule vers le côté d'aspiration (12) du compresseur en passant par un second organe de détente (26) et en contournant :
- un segment (16) du dispositif échangeur de chaleur (14) situé en aval de la dérivation (23) du fluide de refroidissement,
- le premier organe de détente (23'), et
- l'évaporateur (24),
**caractérisé en ce que**
le dispositif échangeur de chaleur (14) est un dispositif échangeur de chaleur fluide de refroidissement/liquide (14), et
le circuit de fluide de refroidissement est couplé thermiquement par l'intermédiaire du dispositif échangeur de chaleur fluide de refroidissement/liquide (14) avec un circuit de chauffage (17) traversé par un liquide.

18. Circuit de fluide de refroidissement conforme à la revendication 17,
**caractérisé en ce qu'**
il est prévu un collecteur (25) qui est monté entre l'évaporateur (24) et l'entrée d'aspiration (12) ou entre la dérivation du fluide de refroidissement (23) et l'entrée d'aspiration (12).

19. Circuit de fluide de refroidissement conforme à la revendication 18,
**caractérisé en ce qu'**
un second organe de détente (26) est monté entre la dérivation du fluide de refroidissement (23) et le collecteur (25).

20. Circuit de fluide de refroidissement conforme à l'une des revendications 18 et 19,
**caractérisé en ce que**
la sortie du fluide de refroidissement (22) du dispositif échangeur de chaleur fluide de refroidissement/liquide (14) est reliée au collecteur (25) par l'intermédiaire d'un troisième organe de détente (29).

21. Circuit de fluide de refroidissement conforme à la revendication 20,
**caractérisé en ce que**
le second organe de détente et/ou le troisième organe de détente est(sont) constitué(s) par un(des) organe(s) de détente (26, 29) réglable(s).

22. Circuit de fluide de refroidissement conforme à la revendication 20,
**caractérisé en ce que**
le second organe de détente et/ou le troisième organe de détente (26, 29) est(sont) constitué(s) par un étranglement ayant une section d'écoulement fixe.

23. Circuit de fluide de refroidissement conforme à l'une des revendications 17 à 22,
**caractérisé en ce que**
le circuit de chauffage (17) comporte une pompe (18) dont la puissance de refoulement est réglable.
